(19) **Europäisches Patentamt**
**European Patent Office**
**Office européen des brevets**

(11) **EP 3 348 056 B1**

(12) **EUROPEAN PATENT SPECIFICATION**

(45) Date of publication and mention
of the grant of the patent:
**09.03.2022 Bulletin 2022/10**

(21) Application number: **16758202.2**

(22) Date of filing: **01.09.2016**

(51) International Patent Classification (IPC):
*H04N 19/186* (2014.01)    *H04N 19/117* (2014.01)
*H04N 19/463* (2014.01)    *H04N 19/136* (2014.01)
*H04N 19/86* (2014.01)

(52) Cooperative Patent Classification (CPC):
**H04N 19/186; H04N 19/117; H04N 19/136;
H04N 19/463; H04N 19/86**

(86) International application number:
**PCT/EP2016/070569**

(87) International publication number:
**WO 2017/042079 (16.03.2017 Gazette 2017/11)**

(54) **METHODS AND DEVICES FOR ENCODING AND DECODING A SEQUENCE OF PICTURES, AND CORRESPONDING COMPUTER PROGRAM PRODUCTS AND COMPUTER-READABLE MEDIUM**

VERFAHREN UND VORRICHTUNGEN ZUR CODIERUNG UND DECODIERUNG EINER BILDSEQUENZ SOWIE EIN ENTSPRECHENDES COMPUTERPROGRAMMPRODUKT UND COMPUTERLESBARES MEDIUM

PROCÉDÉS ET DISPOSITIFS DE CODAGE ET DE DÉCODAGE D'UNE SÉQUENCE D'IMAGES, PRODUIT DE PROGRAMME INFORMATIQUE CORRESPONDANT ET SUPPORT LISIBLE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.09.2015 EP 15306369**

(43) Date of publication of application:
**18.07.2018 Bulletin 2018/29**

(73) Proprietor: **InterDigital VC Holdings, Inc.
Wilmington, DE 19809 (US)**

(72) Inventors:
• **BORDES, Philippe**
**35576 Cesson-Sevigne Cedex (FR)**
• **ANDRIVON, Pierre**
**35576 Cesson-Sevigne Cedex (FR)**
• **SALMON, Philippe**
**35250 Saint Sulpice La Foret (FR)**

(74) Representative: **Interdigital
975, avenue des Champs Blancs
35576 Cesson-Sévigné Cedex (FR)**

(56) References cited:
**WO-A1-2013/059461    US-A1- 2014 376 608**

• **LAROCHE G ET AL: "Non-CE1: On SAO
parameters reduction for Chroma", 100. MPEG
MEETING; 30-4-2012 - 4-5-2012; GENEVA;
(MOTION PICTURE EXPERT GROUP OR ISO/IEC
JTC1/SC29/WG11),, no. m24422, 26 April 2012
(2012-04-26), XP030052767,**
• **CHIH-MING FU ET AL: "Sample Adaptive Offset
in the HEVC Standard", IEEE TRANSACTIONS ON
CIRCUITS AND SYSTEMS FOR VIDEO
TECHNOLOGY, IEEE SERVICE CENTER,
PISCATAWAY, NJ, US, vol. 22, no. 12, 1 December
2012 (2012-12-01), pages 1755-1764,
XP011487153, ISSN: 1051-8215, DOI:
10.1109/TCSVT.2012.2221529**

**Description**

**1. Technical field**

The present disclosure relates to the encoding and decoding of picture or sequence of pictures, also called video.
More specifically, the present disclosure offers a technique for post-processing picture units, such as prediction units or decoded units, at the encoding or at the decoding side, aiming at improving their quality and/or accuracy and improving the coding efficiency.
Such technique according to the present disclosure could be implemented in a video encoder and/or a video decoder complying with any video codec standardization, including for example HEVC, SHVC, HEVC-Rext and other HEVC extensions.

**2. Background art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.
The range of an original video content (i.e. minimum and maximum values of a sample of the original video content) is generally known and/or determined by the encoder.
Some extreme values of the range could be reserved for special use. For instance, the ITU-R Recommendation BT.709 (commonly known by the abbreviation Rec. 709) uses "studio-swing" levels where reference black is defined as 8-bit code 16 and reference white is defined as 8-bit code 235. Codes 0 and 255 are used for synchronization, and are prohibited from video data. Eight-bit codes between 1 and 15 provide "footroom", and can be used to accommodate transient signal content such as filter undershoots. Eight-bit codes 236 through 254 provide "headroom", and can be used to accommodate transient signal content such as filter overshoots and specular highlights. Bit-depths deeper than 8 bits are obtained by appending least-significant bits. The 16...235 range for R, G, B or luma, or 16...240 range for chroma, originated with ITU Rec. 601, are known as being the "normal range" opposed to the 0...255 range known as the "full range".
In another use case, the pictures sample range values of an original video content is known because the content creator intentionally limited the minimum and maximum values for luma and chroma, or because the content creation process is known to limit the component values in a particular range.
In another use case, a pre-processing module can be used to compute the original content histogram and to determine the range limits.
The original range limits are thus known at the encoding side.
However, the video encoding process changes the original range limits.
More specifically, the video encoder allows the compression of the original video content, in order to reduce significantly the data amount in the encoded video stream. However, the reconstructed/decoded picture samples may be not strictly identical to the original ones due to lossy compression. Consequently, if the range of an original picture sample was ($min_{orig}, max_{orig}$), the range of the reconstructed/decoded picture sample can be ($min_{rec}, max_{rec}$), with $min_{rec} < min_{orig}$ and/or $max_{rec} > max_{orig}$.
Most of the video codecs, like MPEG-2, AVC, SVC, HEVC, SHVC, etc, perform fixed a priori (or "normal range") min/max clipping tests using $min_{thres}=0$ and $max_{thres}=(1<<bitdepth)-1$, where bitdepth is the number of bits used to represent one picture sample component. For example, if bitdepth=8, then maxthres= 255.
When clipping with this method, the original range limits constraint (e.g. Rec. 709) may be violated. Consequently, non-respect of the original range limits can impact the reconstructed/decoded pictures quality/accuracy.
In addition, since the reconstructed/decoded picture samples may be used as predictor for subsequent picture samples (intra or inter prediction), this reconstructed/decoded picture sample inaccuracy may propagate in the pictures, leading to encoding drift artifacts or encoding inefficiency.
It would hence be desirable to provide a technique for encoding and/or decoding a sequence of pictures that would be more efficient.

**3. Summary**

The invention is set out in the appended set of claims.

## 4. Brief description of the drawings

The disclosure will be better understood and illustrated by means of the following embodiment and execution examples, in no way limitative, with reference to the appended figures on which:

- Figure 1 illustrates the main steps of a method for encoding a sequence of pictures according to an embodiment of the disclosure;
- Figure 2 presents the main steps of a method for decoding a video stream according to an embodiment of the disclosure;
- Figure 3 shows an example of an encoder according to an embodiment of the disclosure;
- Figure 4 shows an example of a decoder according to an embodiment of the disclosure;
- Figure 5 illustrates an histogram with three components obtained from the picture unit,
- Figures 6A, 6B, 7A and 7B show different examples of correspondence functions,
- Figure 8 illustrates an approximation of a correspondence function of Figure 6A,
- Figures 9 and 10 are block diagrams of devices implementing respectively the encoding method according to Figure 1 and the decoding method according to Figure 2; and
- Figure 11 depicts bounds for the V component as a function of the Y component.

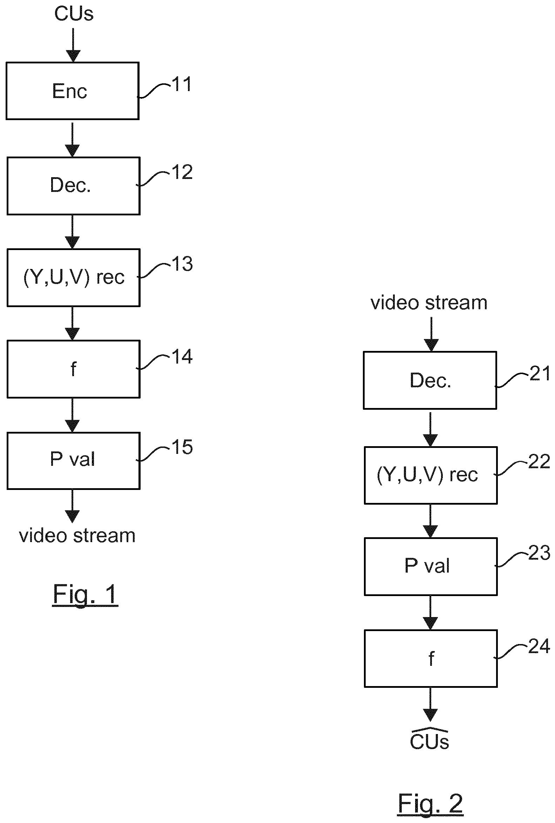

In Figures 1 to 4, 9 and 10, the represented blocks are purely functional entities, which do not necessarily correspond to physically separate entities. Namely, they could be developed in the form of software, hardware, or be implemented in one or several integrated circuits, comprising one or more processors.

## 5. Description of embodiments

It is to be understood that the figures and descriptions of the present disclosure have been simplified to illustrate elements that are relevant for a clear understanding of the present disclosure, while eliminating, for purposes of clarity, many other elements found in typical encoding and/or decoding devices.

### 5.1 General Principle

A general principle of the disclosure is to apply a post-processing to a prediction unit or a decoded unit, i.e. more generally a picture unit, in order to improve the quality and/or accuracy of the picture unit, at the encoding side and/or at the decoding side.
Such post-processing could be applied to a color component of the picture unit, but takes into account another color component of the picture unit, also called "dual component".
Such post-processing could be for example:

- the clipping of the values of a color component of the picture unit, taking into account the values of another color component, in order to respect the original range limit of the picture unit,
- the filtering of the values of a color component of the picture unit, taking into account the values of another color component,
- etc.

In the following, the words "reconstructed" and "decoded" can be used interchangeably. Usually, "reconstructed" is used on the encoder side while "decoded" is used on the decoder side.
The main steps of the method for encoding a sequence of pictures into a video stream, and of decoding a video stream, are illustrated respectively in Figures 1 and 2.
In the following the method is disclosed with respect to a decoded unit but may also be applied to a prediction unit. In the latter case when encoding/decoding a coding unit the post-processed prediction unit is used.
As illustrated in Figure 1, at least one picture of the sequence of pictures is split into coding units CUs (pixels, groups of pixels, slices, pictures, GOP, ...).
In step 11, at least one of the coding unit is encoded. It should be noted that a prediction unit may be obtained in step 11, and used for the coding of the coding unit.
In order to improve the encoding of the coding unit, the encoder implements at least one decoding loop. Such decoding loop implements a decoding of the coding unit in step 12, to obtain a decoded unit. It should be noted that the prediction unit used in step 11 is used for the decoding of the coding unit.
In step 13, at least a first color component and a second color component of the decoded unit are obtained. Such color components belongs for example to the RGB components, or to the YUV components. For example, a coding unit is a pixel comprising one or several components. For color video, each pixel usually comprises a luma component Y, and two chroma components U and V.

It will be understood that, although the terms first and second may be used herein to describe various color components, these color components should not be limited by these terms. These terms are only used to distinguish one color component from another. For example, a first color component could be termed "a component" or "a second color component", and, similarly, a second color component could be termed "another component" or "a first color component" without departing from the teachings of the disclosure.

In step 14, at least one post-processing $f$ is applied to the second color component of the decoded unit, responsive to at least one parameter Pval of said post-processing (denoted as a post-processing parameter) and to said first color component, said at least one parameter being defined as a function of the first color component (denoted as a correspondence function $p$).

According to a first example, a first correspondence function can associate a first post-processing parameter, like the minimum value of the U component of the decoded unit, with the values of a first color component of the decoded unit, like the Y component of the decoded unit. In other words, the first correspondence function defines the minimum value of the U component of the decoded unit for each value of the Y component of the decoded unit. A second correspondence function can associate a second post-processing parameter, like the maximum value of the U component of the decoded unit, with the values of a first color component of the decoded unit, like the Y component of the decoded unit.

Then, at least one post-processing is applied to the second color component of the decoded unit, such post-processing having the post-processing parameter as parameter.

According to the first example, the post-processing $f$ can be a clipping function, in which the post-processing parameter(s) define(s) the minimum and/or maximum values of the second color component of the decoded unit.

According to a second example, the post-processing $f$ can be an offset function, in which the post-processing parameter(s) define(s) an offset to be added to the second color component of the decoded unit.

According to a third example, the post-processing $f$ can be a linear filtering function, in which the post-processing parameter(s) define the coefficients of the filter to be applied on the second component of the picture unit.

Such post-processing parameter Pval is encoded, e.g. in the form of the correspondence function p, and stored and/or transmitted to a decoder in step 15.

Figure 2 illustrates the main steps of the method for decoding a video stream representative of a sequence of pictures, according to the disclosure.

In step 21, at least one coding unit of said sequence, encoded in the video stream, is decoded, to obtain a decoded unit. A prediction unit may be obtained in step 21, and used for the decoding of the coding unit.

In step 22, at least a first color component and a second color component of the decoded unit are obtained. As mentioned above, such color components belong for example to the RGB components, or to the YUV components.

In step 23, at least one parameter Pval of a post-processing of the second component (denoted as a post-processing parameter) is decoded, said at least one parameter being defined as a function of the first color component (denoted as a correspondence function). Such parameter Pval can be encoded and transmitted to a decoder by the encoder in the form of the correspondence function which associates the at least one parameter with the values of the first color component of the decoded unit. Note that the step 23 may be placed between steps 21 and 22, or before step 21.

In step 24, at least one post-processing $f$ is applied to the second color component of the decoded unit, such post-processing having said post-processing parameter as parameter.

The proposed solution thus allows to improve the quality and/or accuracy of the decoded units, at the encoder and/or decoder sides.

According to a specific embodiment, the present disclosure proposes to send clipping value for one component (e.g. Y) as a function of another component (e.g. U). For instance, min and max clipping values for the luma component Y are encoded, and min and max values for each chroma components are encoded as functions of the luma component. In that way, the clipping values are specialized for each value of the other component and the clipping correction is more precise.

*5.2 Disclosure of a specific embodiment*

In this section, effort will be made more particularly to describe how the encoder and the decoder work with a post-processing of the clipping type. The invention disclosure is of course not limited to this particular type of post-processing, and other post-processing may be concerned, such as the linear filtering or the adding of an offset.

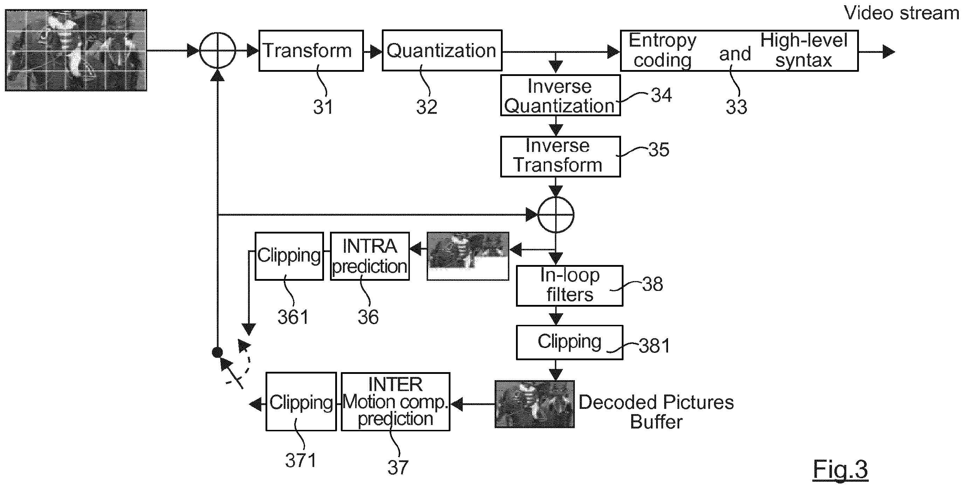

Let's consider for example the encoder illustrated in Figure 3. As already explained in view of Figure 1, the input video signal is first split into coding units.

The encoder can implement the classical transform step 31, quantization step 32, and high-level syntax and entropy coding step 33.

In order to improve the encoding of the coding units, the encoder can also implement at least one decoding loop. To this end, the encoder can implement the classical inverse quantization step 34, inverse transform step 35, and intra prediction 36 and/or inter prediction 37.

Once a coding unit is reconstructed/decoded, the color components of the picture unit are obtained, and at least one correspondence function associating post-processing parameter value(s) with the values of a color component of the picture unit is defined.

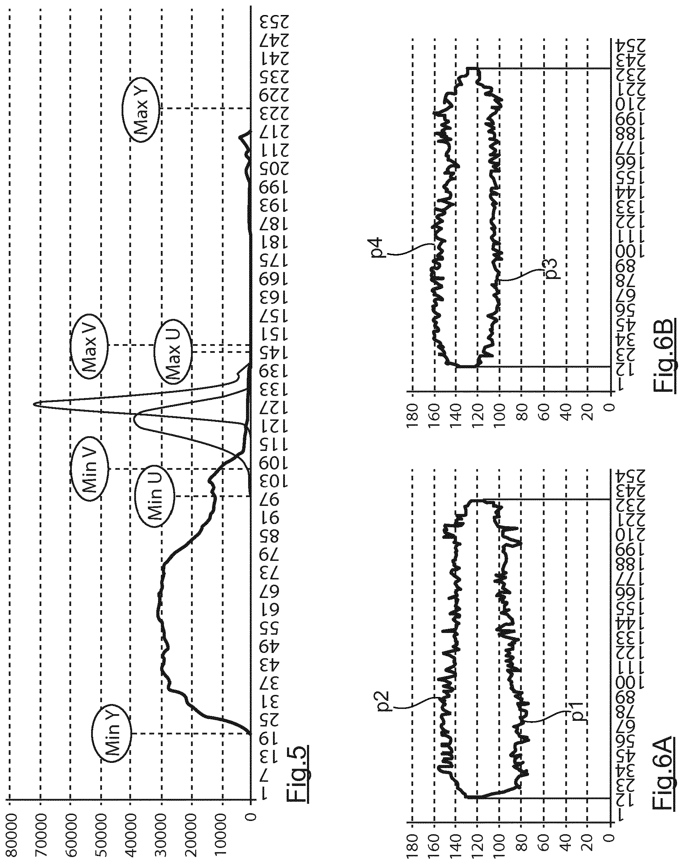

For example, as illustrated in Figure 5, an histogram with the three components Yrec, Urec, $V_{rec}$ is obtained from the picture unit. From this histogram, four correspondence functions are determined.

According to a first example, illustrated in Figures 6A and 6B, a first correspondence function *p1* associates a post-processing (clipping) parameter of the type minimum value of the $U_{rec}$ component with each value of the $Y_{rec}$ component, a second correspondence function *p2* associates a post-processing (clipping) parameter of the type maximum value of the Urec component with each value of the $Y_{rec}$ component, a third correspondence function *p3* associates a post-processing (clipping) parameter of the type minimum value of the Vrec component with each value of the $Y_{rec}$ component, and a fourth correspondence function *p4* associates a post-processing (clipping) parameter of the type maximum value of the Vrec component with each value of the Yrec component.

For example, a first correspondence function associating a minimum value of the Urec component with each value of the $Y_{rec}$ component, and a second correspondence function associating a maximum value of the Urec component with each value of the Yrec component are defined by the tables below:

| Yrec | minimum value of $U_{rec}$ (Pval) |
|------|-----------------------------------|
| 0 | 0 |
| 1 | 0 |
| 2 | 0 |
| ... | ... |
| 18 | 118 |
| 19 | 116 |
| ... | ... |
| 235 | 120 |
| ... | ... |

| Yrec | maximum value of $U_{rec}$ (Pval) |
|------|-----------------------------------|
| 0 | 0 |
| 1 | 0 |
| 2 | 0 |
| ... | ... |
| 18 | 130 |
| 19 | 131 |
| ... | ... |
| 235 | 125 |
| ... | ... |

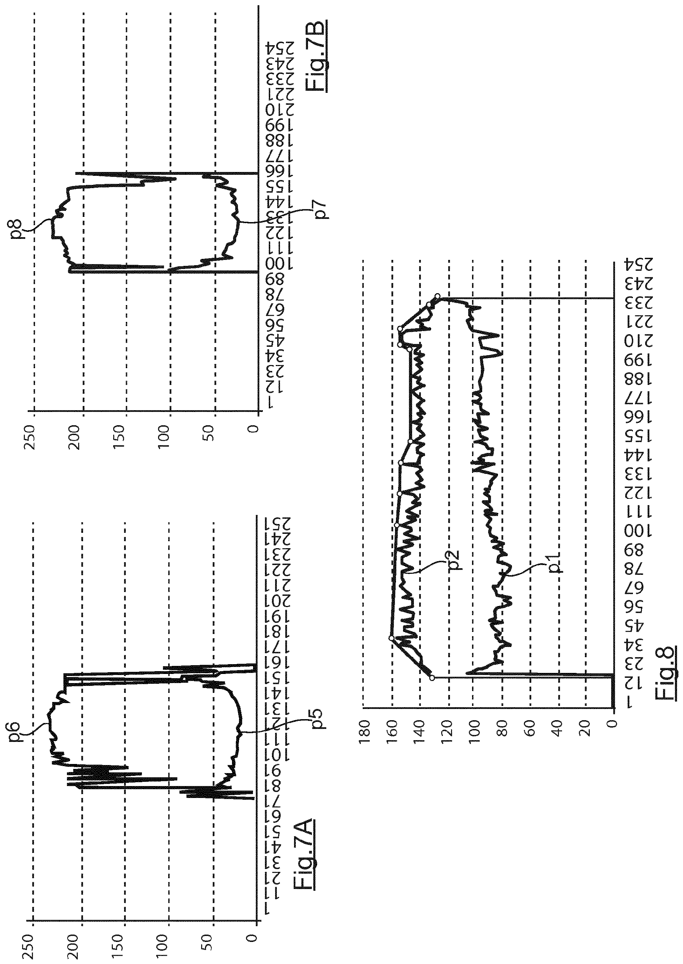

According to a second example, illustrated in Figures 7A and 7B, a fifth correspondence function *p5* associates a post-processing (clipping) parameter of the type minimum value of the Yrec component with each value of the $U_{rec}$ component, a sixth correspondence function *p6* associates a post-processing (clipping) parameter of the type maximum value of the Yrec component with each value of the $U_{rec}$ component, a seventh correspondence function *p7* associates a post-processing (clipping) parameter of the type minimum value of the Yrec component with each value of the Vrec component, and an eighth correspondence function *p8* associates a post-processing (clipping) parameter of the type maximum value of the Yrec component with each value of the Vrec component.

In other words, for a given component (ex: Y,U or V), in a given reconstructed/decoded frame, slice, GOP or group of macroblocks, ..., the clipping parameters can be defined as a function of another (dual) component value.

Such clipping parameters can be used by a post-processing of the clipping type, as illustrated in Figure 3.

For example, such post-processing can be done before and/or after the in-loop filters 38 (clipping 381), and/or after the intra prediction 36 (clipping 361), and/or after the inter motion compensation prediction 37 (clipping 371).

If we consider the first example, the clipping 361 following the intra prediction 36, for instance, aims at applying a post-processing *f1* to the U component of the prediction unit, denoted as $U_{pred}$, depending on the post-processing parameter Pval corresponding to the minimum value used by the clipping, said post-processing parameter Pval depending on the value of the Yrec component. The U component of the prediction unit after post-processing is denoted $U_{post}$ :

$$U_{post} = f_1(U_{pred}, Pval).$$

Such post-processing *f1* could be a clipping function such as:

- if $U_{pred} < P_{val}$, then $U_{post} = P_{val}$
- if $U_{pred} \geq P_{val}$, then $U_{post} = U_{pred}$, where $P_{val}$ depends on $Y_{rec}$.

The proposed solution thus insures that the values of the post-processed unit have the same range values as the picture unit (or at least closer to the picture unit range values), and possibly as the coding unit.

The same processing could be applied to other components of a picture unit. In particular, when a component has been post-processed, the post-processed component could be used to process other components. For example, the first correspondence function (or table) could be updated with the value of the U component after post-processing ($U_{post}$), and then used for the post-processing of the U component of another picture unit, or for the post-processing of another component.

In other words, if another correspondence function associating a post-processing parameter of the type minimum value of the Urec component with each value of the Vrec component is defined, the Vrec component could be post-processed only after the Urec component has been post-processed. The ordering of the several post-processing stage can be defined in advance or it can be signaled in the bitstream.

The post-processing parameters in the form of correspondence functions and/or the post-processing functions, can be encoded and sent to the decoder, to improve the decoded pictures in a similar way than at the encoding side. It is thus proposed according to at least one embodiment to send/encode/decode the clipping parameters of one color component, as a function of another (dual) color component.

In order to reduce the amount of information transmitted from the encoder to the decoder, the correspondence functions can be approximated.

If we consider the second correspondence function *p2* for instance, such function could be approximated using a piecewise linear function, as illustrated in Figure 8. For example, ten affine function pieces and eleven points joining the affine function pieces are used to approximate the second correspondence function *p2,* and the set of eleven points is encoded to be transmitted to the decoder. In other words, the encoding of the clipping parameters can be made using piece-wise linear model, encoding a set of points of the correspondence function.

The encoding of the post-processing parameters in the form of correspondence functions and/or the post-processing functions, can be implemented by the entropy coding step 33.

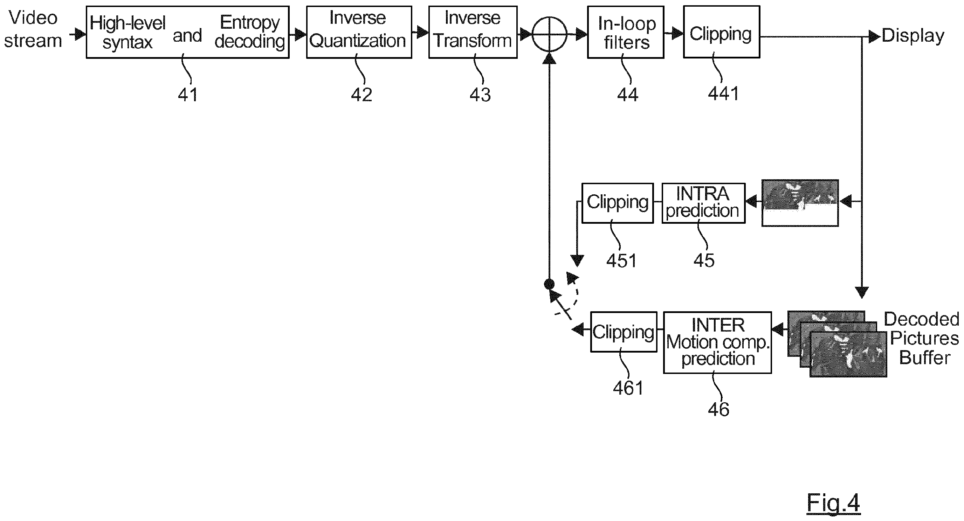

Let's now consider for example the decoder illustrated in Figure 4.

At the decoding side, the video stream representative of a sequence of pictures is decoded. Such decoder can implement the classical high-level syntax and entropy decoding step 41, inverse quantization step 42, and inverse transformation step 43.

The post-processing parameters in the form of correspondence functions and/or the post-processing functions, can also be decoded, in the entropy decoding step 41.

Once a coding unit is decoded, the color components of the picture unit are obtained, and at least one post-processing parameter(s) is obtained. For example, the first correspondence table is decoded. The decoder thus knows, for each value of the Y component of the picture unit, the minimum value that should take the U component of the picture unit.

Such post-processing parameters can be used by a post-processing of the clipping type, as illustrated in Figure 4, in a similar manner than described for the encoder.

For example, such post-processing can be done before and/or after the in-loop filters 44 (clipping 441), and/or after the intra prediction 45 (clipping 451), and/or after the inter motion compensation prediction 46 (clipping 461).

If we consider, once again, the clipping 451 following the intra prediction 45, such clipping 451 aims at applying the post-processing *f1* to the U component of the prediction unit outputted by the intra prediction 45, denoted as $U_{pred}$,

depending on the post-processing parameter Pval corresponding to the minimum value of the Urec component.

Such clipping function *f1* could be expressed as:

- if $U_{pred} < P_{val}$, then $U_{post} = P_{val}$
- if $U_{pred} \geq P_{val}$, then $U_{post} = U_{pred,}$ , where *Pval* depends on $Y_{rec}$

When the correspondence functions have been approximated at the encoder side, the decoder side can decode them by first decoding a set of points (like the eleven points of Figure 8) and then by interpolating values between the points of the set.

In the embodiment described above, we considered that the post-processing is a clipping function, and the post-processing parameters are clipping parameters.

However, the invention is not limited to this specific embodiment.

According to another embodiment, the post-processing is an offset function, and the post-processing parameters define offsets (Pval) to be added to the second color component of the picture unit. In other words, in case offsets are transmitted/encoded/decoded, it is proposed to categorize the values of one color component (ex: Y component) with values of another component (ex: U or V component). For example, for values of Yrec component comprised between 0 and 18, the offset to be added to the values of Urec component is 0, for values of Yrec component comprised between 19 and 32, the offset to be added to the values of Urec component is 5, for values of Yrec component comprised between 33 and 64, the offset to be added to the values of Urec component is 3, etc. Such offsets define a correspondence function which can be approximated by a piece-wise linear function.

The post-processing in this case could be expressed as:

$U_{post} = f(U_{rec}, Pval) = U_{rec} + P_{val}$, where $P_{val}$ depends on $Y_{rec}$.

According to another embodiment, the post-processing is a linear filtering function, and the post-processing parameters define the coefficients of the filter to be applied on the second component of the picture unit. For example, $Pval_i = p_i(Y_{rec})$ defines the value of the coefficient *i* of the linear filter of size *N*, to be applied to the component Urec. If the component Urec is localized at the position *x* in the picture unit, than the post-processing could be expressed as:

$$U_{post} = f(U_{rec}, Pval_i)$$

$$= p_0(Y_{rec}).U_{rec}\left(x - \frac{N}{2}\right) + \cdots + p_i(Y_{rec}).U_{rec}\left(x + i - \frac{N}{2}\right) + \cdots$$

$$+ p_N(Y_{rec}).U_{rec}\left(x + \frac{N}{2}\right)$$

It should also be noted that the correspondence function(s) associating at least one post-processing parameter with the values of the second color component of the picture unit could be determined from the original sequence of pictures / coding units rather than from the picture unit.

In this case, a color histogram can be obtained on the encoding side from the analysis of the original sequence of pictures, and the values of the different color component can be obtained from this histogram, in order to determine at least one correspondence function *p*. If some color components of the picture unit (for example $U_{rec}$) are not identical to the color components of the coding unit (for example U), then p(U) will be different from p(Urec). In this case, the correspondence function might be slightly adjusted by the encoder, such that p'(Urec) = p(U), and it is the adjusted correspondence function that should be encoded and stored/transmitted to the decoder.

According to another embodiment, for each component, an index indicating the dual component used for the correspondence function (for example clipping range function or categorization) is encoded directly or differentially.

According to another embodiment, the post-processing parameters may be used as post-processing on the reconstructed pictures only, by the decoder. In this case, the correspondence functions can be encoded in a SEI message, SPS, PPS, or slice header for example.

According to another embodiment, the post-processing parameters may be used in all or only part of post-processing operations in the encoder and/or decoder: motion compensation (prediction), intra prediction, in-loop post-filter processing, etc.

In the previous embodiments, the post-processing method (e.g. a clipping method) uses one component (e.g. Y) to predict the bounds (min and/or max clipping values) of another component (e.g. U or V). As an example, the min m (respectively max M) clipping value of U (or V) may be defined as a function of the collocated value Y: m=f(Y), M=f(Y).

In the case where the function f is determined using original YUV samples (for example as a pre-processing step before encoding a frame) and the function f(Y) is used at the decoder side, there may be a drift since, on the decoder side, only $Y_{rec}$, i.e. the reconstructed Y, is available. The reconstruction error on Y is going to introduce some error on the bounds of U and V.

In order to overcome this problem, the function f() may be determined using the original samples while taking into account a reconstruction error E on Y (E = $Y_{rec}$ - Y):

- the lower and upper bounds functions of Y are reconstructed: m [Y] and M[Y]
- given a maximum reconstruction error E on Y (given by the QP of the frame), new bound functions m2 and M2 are determined : ∘

$$m_{2[Y]} = \min_{Y' \in [Y-E,Y+E]} m[Y']$$

$$M_{2[Y]} = \max_{Y' \in [Y-E,Y+E]} M[Y']$$

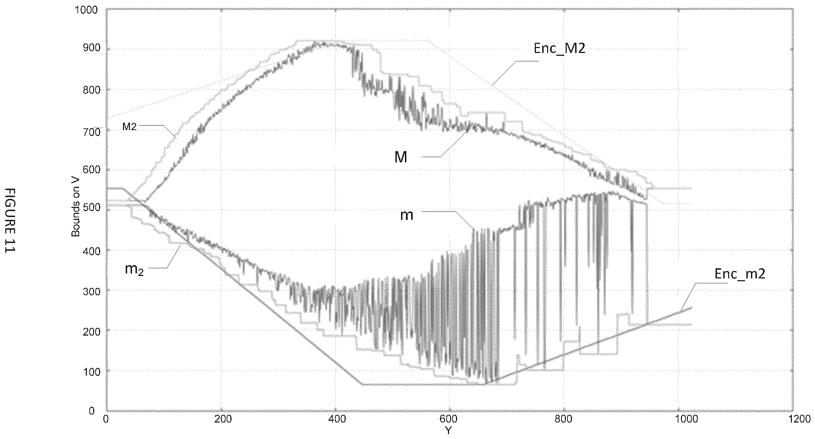

On Figure 11, the original lower and upper bounds of the V component are depicted as a function of Y by curves m and M respectively and the new bound functions are depicted by curves $m_2$ and $M_2$ respectively. The curves Enc_m2 and Enc_M2 show an example of bound functions encoded using Piece-Wise-Linear models for efficiency purposes.

One advantage of this variant is that the clipping on U and V components may be done at any stage in the decoder (for example in the RDO), which usually provides better results.

In a specific embodiment, f() and E are encoded in the bitstream, f() being determined using the original signal at the encoder.

The same principle applies in the case where the bounds on Y are defined as a function of U or V.

In a variant, the function f() may be determined using $Y_{rec}$ instead of the original samples Y. In this case, the clipping will be done as a post-process, i.e. after the reconstruction of the whole luma frame (but still in the encoding process of the frame so that the clipped frame may be used during prediction of other frames). Indeed, the function f can only be determined after the encoding of the whole frame.

In the case where, Y is coded before the U and V components, then the clipping on U or V may be applied in the coding loop of U or V.

In a specific embodiment, f() isencoded in the bitstream, f() being determined using the original signal at the encoder.

While not explicitly described, the present embodiments and variants may be employed in any combination or sub-combination.

*5.3 Devices*

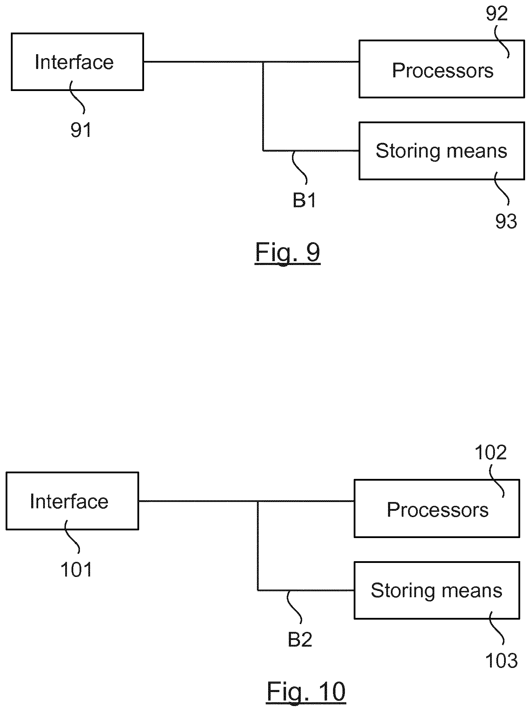

Figure 9 illustrates an example of a device for encoding a sequence of pictures into a video stream according to an embodiment of the disclosure. Only the essential elements of the encoding device are shown.

Such an encoding device comprises at least:

- a communication interface 91 configured to access said sequence of pictures,
- at least one processor 92 for executing the applications and programs stored in a nonvolatile memory of the device, and especially configured to:

  - obtain at least a first color component and a second color component of a picture unit of the sequence of pictures,
  - apply at least one post-processing to the second color component of the picture unit responsive to at least one parameter of said post-processing and to said first color component, said at least one parameter being defined as a function of the first color component,
  - encode said at least one parameter,

- storing means 93, such as a volatile memory,
- an internal bus B1 to connect the various modules and all means well known to the skilled in the art for performing the encoding device functionalities.

Figure 10 illustrates an example of a device for decoding a video stream representative of a sequence of pictures, according to an embodiment of the disclosure. Only the essential elements of the decoding device are shown.

Such a decoding device comprises at least:

- a communication interface 101 configured to access said at least one video stream,

- at least one processor 102 for executing the applications and programs stored in a nonvolatile memory of the device and especially configured to:

  - obtain at least a first color component and a second color component of a picture unit,
  - decode at least one parameter of a post-processing of the second component, said at least one parameter being defined as a function of the first color component,
  - apply said at least one post-processing to the second color component of the picture unit responsive to said at least one decoded parameter and to said first color component,

- storing means 103, such as a volatile memory;
- an internal bus B2 to connect the various modules and all means well known to the skilled in the art for performing the decoding device functionalities.

Such encoding device and/or decoding device could each be implemented according to a purely software realization, purely hardware realization (for example in the form of a dedicated component, like in an ASIC, FPGA, VLSI, ...), or of several electronics components integrated into a device or in a form of a mix of hardware elements and software elements.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

For example, the one or more processors 92 may be configured to execute the various software programs and/or sets of instructions of the software components to perform the respective functions of: obtaining at least a first color component and a second color component of a picture unit, applying at least one post-processing to the second color component of the picture unit responsive to at least one parameter of said post-processing and to said first color component, and encoding said at least one parameter, in accordance with embodiments of the invention.

The one or more processors 102 may be configured to execute the various software programs and/or sets of instructions of the software components to perform the respective functions of: obtaining at least a first color component and a second color component of a picture unit, decoding at least one parameter of a post-processing of the second component, and applying said at least one post-processing to the second color component of the picture unit responsive to said at least one decoded parameter and to said first color component, in accordance with embodiments of the invention.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

**Claims**

1. **A method for decoding** a video stream representative of a sequence of pictures, the method comprising:

   - obtaining (22) at least a first color component and a second color component of a pixel of a picture unit,
   - decoding (23) at least one parameter (Pval) of a at least one post-processing of the second color component,
   - applying (24) said at least one post-processing (*f*) to the second color component of the pixel of the picture unit responsive to a value of said at least one decoded parameter, wherein said at least one decoded parameter defines a function (*p*) of said first color component of the pixel of the picture unit; and

   wherein said at least one post-processing (*f*) comprises a clipping function, in which said at least one parameter (Pval) defines at least one of the minimum or maximum values of the second color component for each value of the first color component of the pixel of the picture unit.

2. **A decoding device for decoding** a video stream representative of a sequence of pictures, comprising a communication interface (101) configured to access said at least one video stream and at least one processor (102) configured to:

   - obtain at least a first color component and a second color component of a pixel of a picture unit,
   - decode at least one parameter of a at least one post-processing of the second color component,
   - apply said at least one post-processing to the second color component of the pixel of the picture unit responsive to a value of said at least one decoded parameter,

   wherein said at least one parameter defines a function of the first color component of the pixel of the picture unit; and wherein said at least one post-processing (*f*) comprises a clipping function, in which said at least one parameter (Pval) defines at least one of the minimum or maximum values of the second color component for each value of the first color component of the pixel of the picture unit.

3. The method according to claim 1 or the decoding device according to claim 2, wherein the picture unit is a prediction unit or a decoded unit.

4. The method according to any one of claims 1, 3, wherein decoding at least one parameter defining a function (*p*) of the first color component of the pixel of the picture unit comprises decoding a set of points representative of said function (*p*).

5. The method according to claim 4, wherein decoding at least one parameter defining a function (*p*) of the first color component of the pixel of the picture unit further comprises interpolating values between two points of the set of points.

6. **A method for encoding** a sequence of pictures into a video stream, the method comprising:

   - obtaining (13) at least a first color component and a second color component of a pixel of a picture unit,
   - applying (14) at least one post-processing (*f*) to the second color component of the pixel of the picture unit responsive to a value of at least one parameter (Pval) of said at least one post-processing;
   - encoding (15) said at least one parameter,

   wherein said at least one parameter defines a function of the first color component of the pixel of the picture unit; and wherein said at least one post-processing (*f*) comprises a clipping function, in which said at least one parameter defines the minimum or maximum values of the second color component for each value of the first color component of the pixel of the picture unit.

7. **An encoding device for encoding** a sequence of pictures into a video stream, comprising a communication interface (91) configured to access said sequence of pictures and at least one processor (92) configured to:

   - obtain at least a first color component and a second color component of a pixel of a picture unit,
   - apply at least one post-processing to the second color component of the pixel of the picture unit responsive to a value of at least one parameter of said at least one post-processing;
   - encode said at least one parameter;

wherein said at least one encoded parameter defines a function of said first color component of the pixel of the picture unit; and

wherein said at least one post-processing ($f$) comprises a clipping function, in which said at least one parameter defines the minimum or maximum values of the second color component for each value of the first color component of the pixel of the picture unit.

8. The method according to claim 6 or the encoding device according to claim 7, wherein the picture unit is a prediction unit or a decoded unit.

9. The method according to claim 6 or 7, wherein encoding said at least one parameter defining a function ($p$) of the first color component of the pixel of the picture unit comprises encoding a set of points of said function ($p$).

10. The method according to claim 9, wherein encoding a set of points of said function ($p$) comprises:

   - approximating said function using a piecewise linear function, to obtain at least one affine function piece, and
   - encoding the points of the affine function piece.

11. **A computer program product** comprising software code adapted to perform a method according to anyone of claims 1, 3 to 5, 6, 8 to 10 when said software code is executed by a processor.

12. **A non-transitory computer-readable medium** comprising a computer program product recorded thereon and capable of being run by a processor, including program code instructions for implementing a method according to anyone of claims 1, 3 to 5, 6, 8 to 10.

13. The device according to claim 2 or 3, wherein said at least one processor (102) is further configured to decode a set of points representative of said function ($p$).

14. The device according to claim 13, wherein said at least one processor (102) is further configured to interpolate values between two points of the set of points.

15. The device according to claim 7 or 8, wherein said at least one processor (92) is further configured to encode a set of points representative of said function ($p$).


**Patentansprüche**

1. **Verfahren zum Decodieren** eines Videostroms, der eine Folge von Bildern repräsentiert, wobei das Verfahren umfasst:

   - Erhalten (22) mindestens einer ersten Farbkomponente und einer zweiten Farbkomponente eines Pixels einer Bildeinheit,
   - Decodieren (23) mindestens eines Parameters (Pval) mindestens einer Nachverarbeitung der zweiten Farbkomponente,
   - Anwenden (24) der mindestens einen Nachverarbeitung ($f$) auf die zweite Farbkomponente des Pixels der Bildeinheit als Reaktion auf einen Wert des mindestens einen decodierten Parameters,

   wobei der mindestens eine decodierte Parameter eine Funktion ($p$) der ersten Farbkomponente des Pixels der Bildeinheit definiert; und

   wobei die mindestens eine Nachverarbeitung ($f$) eine Clipping-Funktion umfasst, in der der mindestens eine Parameter (Pval) für jeden Wert der ersten Farbkomponente des Pixels der Bildeinheit den Minimal- und/oder den Maximalwert der zweiten Farbkomponente definiert.

2. **Decodierungsvorrichtung zum Decodieren** eines Videostroms, der eine Folge von Bildern repräsentiert, wobei die Decodierungsvorrichtung umfasst: eine Kommunikationsschnittstelle (101), die dafür konfiguriert ist, auf den mindestens einen Videostrom zuzugreifen, und mindestens einen Prozessor (102), der konfiguriert ist zum:

   - Erhalten mindestens einer ersten Farbkomponente und einer zweiten Farbkomponente eines Pixels einer Bildeinheit,

- Decodieren mindestens eines Parameters mindestens einer Nachverarbeitung der zweiten Farbkomponente,
- Anwenden der mindestens einen Nachverarbeitung auf die zweite Farbkomponente des Pixels der Bildeinheit als Reaktion auf einen Wert des mindestens einen decodierten Parameters,

wobei der mindestens eine Parameter eine Funktion der ersten Farbkomponente des Pixels der Bildeinheit definiert; und

wobei die mindestens eine Nachverarbeitung (*f*) eine Clipping-Funktion umfasst, in der der mindestens eine Parameter (Pval) für jeden Wert der ersten Farbkomponente des Pixels der Bildeinheit den Minimal- und/oder den Maximalwert der zweiten Farbkomponente definiert.

3. Verfahren nach Anspruch 1 oder Decodierungsvorrichtung nach Anspruch 2, wobei die Bildeinheit eine Vorhersageeinheit oder eine decodierte Einheit ist.

4. Verfahren nach einem der Ansprüche 1, 3, wobei das Decodieren mindestens eines Parameters, der eine Funktion (*p*) der ersten Farbkomponente des Pixels der Bildeinheit definiert, das Decodieren einer Menge von Punkten, die die Funktion (*p*) repräsentieren, umfasst.

5. Verfahren nach Anspruch 4, wobei das Decodieren mindestens eines Parameters, der eine Funktion (*p*) der ersten Farbkomponente des Pixels der Bildeinheit definiert, ferner das Interpolieren von Werten zwischen zwei Punkten der Menge von Punkten umfasst.

6. **Verfahren zum Codieren** einer Folge von Bildern zu einem Videostrom, wobei das Verfahren umfasst:

- Erhalten (13) mindestens einer ersten Farbkomponente und einer zweiten Farbkomponente eines Pixels einer Bildeinheit,
- Anwenden (14) mindestens einer Nachverarbeitung (*f*) auf die zweite Farbkomponente des Pixels der Bildeinheit als Reaktion auf einen Wert mindestens eines Parameters (Pval) der mindestens einen Nachverarbeitung;
- Codieren (15) des mindestens einen Parameters,

wobei der mindestens eine Parameter eine Funktion der ersten Farbkomponente des Pixels der Bildeinheit definiert; und

wobei die mindestens eine Nachverarbeitung (*f*) eine Clipping-Funktion umfasst, in der der mindestens eine Parameter für jeden Wert der ersten Farbkomponente des Pixels der Bildeinheit den Minimal- und/oder den Maximalwert der zweiten Farbkomponente definiert.

7. **Codierungsvorrichtung zum Codieren** einer Folge von Bildern zu einem Videostrom, wobei die Codierungsvorrichtung umfasst: eine Kommunikationsschnittstelle (91), die dafür konfiguriert ist, auf die Folge von Bildern zuzugreifen, und mindestens einen Prozessor (92), der konfiguriert ist zum:

- Erhalten mindestens einer ersten Farbkomponente und einer zweiten Farbkomponente eines Pixels einer Bildeinheit,
- Anwenden mindestens einer Nachverarbeitung auf die zweite Farbkomponente des Pixels der Bildeinheit als Reaktion auf einen Wert mindestens eines Parameters der mindestens einen Nachverarbeitung;
- Codieren des mindestens einen Parameters,

wobei der mindestens eine codierte Parameter eine Funktion der ersten Farbkomponente des Pixels der Bildeinheit definiert; und

wobei die mindestens eine Nachverarbeitung (*f*) eine Clipping-Funktion umfasst, in der der mindestens eine Parameter für jeden Wert der ersten Farbkomponente des Pixels der Bildeinheit den Minimal- und/oder den Maximalwert der zweiten Farbkomponente definiert.

8. Verfahren nach Anspruch 6 oder Codierungsvorrichtung nach Anspruch 7, wobei die Bildeinheit eine Vorhersageeinheit oder eine decodierte Einheit ist.

9. Verfahren nach Anspruch 6 oder 7, wobei das Codieren des mindestens einen Parameters, der eine Funktion (*p*) der ersten Farbkomponente des Pixels der Bildeinheit definiert, das Codieren einer Menge von Punkten der Funktion (*p*) umfasst.

**10.** Verfahren nach Anspruch 9, wobei das Codieren einer Menge von Punkten der Funktion (*p*) umfasst:

- Approximieren der Funktion unter Verwendung einer stückweise linearen Funktion, um mindestens ein affines Funktionsstück zu erhalten, und
- Codieren der Punkte des affinen Funktionsstücks.

**11. Computerprogrammprodukt,** das Softwarecode umfasst, der dafür ausgelegt ist, ein Verfahren nach einem der Ansprüche 1, 3 bis 5, 6, 8 bis 10 auszuführen, wenn der Softwarecode durch einen Prozessor ausgeführt wird.

**12. Nichttransitorisches computerlesbares Medium,** das ein Computerprogrammprodukt umfasst, das darauf aufgezeichnet ist und in der Lage ist, durch einen Prozessor ausgeführt zu werden, wobei es Programmcodeanweisungen zum Implementieren eines Verfahrens nach einem der Ansprüche 1, 3 bis 5, 6, 8 bis 10 enthält.

**13.** Vorrichtung nach Anspruch 2 oder 3, wobei der mindestens eine Prozessor (102) ferner dafür konfiguriert ist, eine Menge von Punkten zu decodieren, die die Funktion (*p*) repräsentieren.

**14.** Vorrichtung nach Anspruch 13, wobei der mindestens eine Prozessor (102) ferner dafür konfiguriert ist, Werte zwischen zwei Punkten der Menge von Punkten zu interpolieren.

**15.** Vorrichtung nach Anspruch 7 oder 8, wobei der mindestens eine Prozessor (92) ferner dafür konfiguriert ist, eine Menge von Punkten zu codieren, die die Funktion (*p*) repräsentieren.

**Revendications**

**1. Procédé de décodage** d'un flux vidéo représentatif d'une séquence d'images, le procédé comprenant :

- l'obtention (22) d'au moins une première composante de couleur et une deuxième composante de couleur d'un pixel d'une unité d'image,
- le décodage (23) d'au moins un paramètre (Pval) d'un au moins un post-traitement de la deuxième composante de couleur,
- l'application (24) dudit au moins un post-traitement (*f*) à la deuxième composante de couleur du pixel de l'unité d'image en réponse à une valeur dudit au moins un paramètre décodé,

dans lequel ledit au moins un paramètre décodé définit une fonction (p) de ladite première composante de couleur du pixel de l'unité d'image ; et
dans lequel ledit au moins un post-traitement (*f*) comprend une fonction d'écrêtage, où ledit au moins un paramètre (Pval) définit au moins la valeur minimale ou maximale de la deuxième composante de couleur pour chaque valeur de la première composante de couleur du pixel de l'unité d'image.

**2. Dispositif de décodage pour décoder** un flux vidéo représentatif d'une séquence d'images, comprenant une interface de communication (101) configurée pour accéder audit au moins un flux vidéo et au moins un processeur (102) configuré pour :

- obtenir au moins une première composante de couleur et une deuxième composante de couleur d'un pixel d'une unité d'image,
- décoder au moins un paramètre d'un au moins un post-traitement de la deuxième composante de couleur,
- appliquer ledit au moins un post-traitement à la deuxième composante de couleur du pixel de l'unité d'image en réponse à une valeur dudit au moins un paramètre décodé, dans lequel ledit au moins un paramètre définit une fonction de la première composante de couleur du pixel de l'unité d'image ; et

dans lequel ledit au moins un post-traitement (*f*) comprend une fonction d'écrêtage, où ledit au moins un paramètre (Pval) définit au moins la valeur minimale ou maximale de la deuxième composante de couleur pour chaque valeur de la première composante de couleur du pixel de l'unité d'image.

**3.** Procédé selon la revendication 1 ou dispositif de décodage selon la revendication 2, dans lequel l'unité d'image est une unité de prédiction ou une unité décodée.

4.  Procédé selon l'une quelconque des revendications 1 à 3, dans lequel le décodage d'au moins un paramètre définissant une fonction *(p)* de la première composante de couleur du pixel de l'unité d'image comprend le décodage d'un ensemble de points représentatifs de ladite fonction *(p)*.

5.  Procédé selon la revendication 4, dans lequel le décodage d'au moins un paramètre définissant une fonction *(p)* de la première composante de couleur du pixel de l'unité d'image comprend en outre l'interpolation de valeurs entre deux points de l'ensemble de points.

6.  **Procédé de codage** d'une séquence d'images dans un flux vidéo, le procédé comprenant :

    - l'obtention (13) d'au moins une première composante de couleur et une deuxième composante de couleur d'un pixel d'une unité d'image,
    - l'application (14) d'au moins un post-traitement *(f)* à la deuxième composante de couleur du pixel de l'unité d'image en réponse à une valeur d'au moins un paramètre (Pval) dudit au moins un post-traitement,
    - le codage (15) dudit au moins un paramètre,

    dans lequel ledit au moins un paramètre définit une fonction de la première composante de couleur du pixel de l'unité d'image ; et
    dans lequel ledit au moins un post-traitement *(f)* comprend une fonction d'écrêtage, où ledit au moins un paramètre définit la valeur minimale ou maximale de la deuxième composante de couleur pour chaque valeur de la première composante de couleur du pixel de l'unité d'image.

7.  **Dispositif de codage pour coder** une séquence d'images en flux vidéo, comprenant une interface de communication (91) configurée pour accéder à ladite séquence d'images et au moins un processeur (92) configuré pour :

    - obtenir au moins une première composante de couleur et une deuxième composante de couleur d'un pixel d'une unité d'image,
    - appliquer au moins un post-traitement à la deuxième composante de couleur du pixel de l'unité d'image en réponse à une valeur d'au moins un paramètre dudit au moins un post-traitement,
    - coder ledit au moins un paramètre,

    dans lequel ledit au moins un paramètre codé définit une fonction de ladite première composante de couleur du pixel de l'unité d'image ; et
    dans lequel ledit au moins un post-traitement *(f)* comprend une fonction d'écrêtage, où ledit au moins un paramètre définit la valeur minimale ou maximale de la deuxième composante de couleur pour chaque valeur de la première composante de couleur du pixel de l'unité d'image.

8.  Procédé selon la revendication 6 ou dispositif de codage selon la revendication 7, dans lequel l'unité d'image est une unité de prédiction ou une unité décodée.

9.  Procédé selon la revendication 6 ou 7, dans lequel le codage dudit au moins un paramètre définissant une fonction *(p)* de la première composante de couleur du pixel de l'unité d'image comprend le codage d'un ensemble de points de ladite fonction *(p)*.

10. Procédé selon la revendication 9, dans lequel le codage d'un ensemble de points de ladite fonction *(p)* comprend :

    - l'approximation de ladite fonction à l'aide d'une fonction linéaire par morceaux pour obtenir au moins un morceau de fonction affine, et
    - le codage des points du morceau de fonction affine.

11. **Programme informatique** comprenant du code logiciel adapté à la mise en œuvre d'un procédé selon l'une quelconque des revendications 1, 3 à 5, 6, 8 à 10 lorsque ledit code logiciel est exécuté par un processeur.

12. **Support non transitoire lisible sur ordinateur** sur lequel est enregistré un programme informatique exécutable par un processeur, comprenant des instructions de code de programme pour la mise en œuvre d'un procédé selon l'une quelconque des revendications 1, 3 à 5, 6, 8 à 10.

13. Dispositif selon la revendication 2 ou 3, dans lequel ledit au moins un processeur (102) est en outre configuré pour décoder un ensemble de points représentatifs de ladite fonction *(p)*.

14. Dispositif selon la revendication 13, dans lequel ledit au moins un processeur (102) est en outre configuré pour interpoler des valeurs entre deux points de l'ensemble de points.

15. Dispositif selon la revendication 7 ou 8, dans lequel ledit au moins un processeur (92) est en outre configuré pour coder un ensemble de points représentatifs de ladite fonction *(p)*.

Fig. 1

Fig. 2

Fig.3

EP 3 348 056 B1

Fig.4

EP 3 348 056 B1

Fig.5

Fig.6A

Fig.6B

EP 3 348 056 B1

Fig.7A

Fig.7B

Fig.8

Fig. 9

Fig. 10

FIGURE 11